# EUROPÄISCHE PATENTANMELDUNG

(11) **EP 2 848 826 A1**
(43) Veröffentlichungstag der Anmeldung: **18.03.2015**
(21) Anmeldenummer: 13184593.5
(22) Anmeldetag: 16.09.2013
(51) Int. Cl.: F16B 13/06

(54) **Spreizanker**

(71) Anmelder: HILTI Aktiengesellschaft, 9494 Schaan (LI)
(72) Erfinder: Schaeffer, Marc, 6800 Feldkirch-Nofels (AT)
(74) Vertreter: Hilti Aktiengesellschaft Corporate Intellectual Property

(57) **Zusammenfassung**

Die Erfindung betrifft einen Spreizanker (1) mit einem Bolzen (10) als erstes Element und mit einer Spreizhülse (20), welche den Bolzen zumindest teilweise umgibt, als zweites Element, wobei der Bolzen einen Spreizbereich zum Aufspreizen der Spreizhülse aufweist, wobei eines der beiden Elemente eine in Längsrichtung des Spreizankers verlaufende Nut (72) und das andere Element einen Vorsprung aufweist, der zumindest bereichsweise in die Nut eingreift. Erfindungsgemäss ist vorgesehen, dass die Nut eine Verengung (73) aufweist, die eine Axialbewegung der Spreizhülse relativ zum Bolzen hemmt.

## Beschreibung

Die Erfindung betrifft einen Spreizanker gemäss dem Oberbegriff des Anspruchs 1. Ein solcher Spreizanker ist ausgebildet mit einem Bolzen als erstes Element und mit einer Spreizhülse, welche den Bolzen zumindest teilweise umgibt, als zweites Element, wobei der Bolzen einen Spreizbereich zum Aufspreizen der Spreizhülse aufweist, wobei eines der beiden Elemente, insbesondere auf einer Aussenmantelfläche oder Innenmantelfläche, eine in Längsrichtung des Spreizankers verlaufende Nut und das andere Element einen Vorsprung aufweist, der zumindest bereichsweise in die Nut eingreift.

Spreizanker sind beispielsweise aus der DE 101 08 844 A1 bekannt. Sie werden in ein Bohrloch in einem Substrat, z. B. in einer Wand oder einer Decke eines Bauteils, eingesetzt. Durch Einziehen des Spreizbereichs des Bolzens in die Spreizhülse wird diese radial aufgeweitet und der Spreizanker im Untergrund verankert.

Die EP 0 515 916 A2 und die DE 2 256 8 12 A1 beschreiben Spreizanker, bei denen durch eine Nutenführung eine Verdrehsicherung der Spreizhülse am Bolzen gebildet ist.

Aufgabe der Erfindung ist es, einen Spreizanker anzugeben, der bei einem geringen Herstellungsaufwand und hoher Zuverlässigkeit besonders gute Lastwerte erreicht.

Die Aufgabe wird erfindungsgemäss durch einen Spreizanker mit den Merkmalen des Anspruchs 1 gelöst. Bevorzugte Ausführungsformen sind in den abhängigen Ansprüchen angegeben.

Ein erfindungsgemässer Spreizanker ist dadurch gekennzeichnet, dass die Nut eine Verengung aufweist, die eine Axialbewegung der Spreizhülse relativ zum Bolzen hemmt.

Erfindungsgemäss weist die Nut eine Verengung auf, die eine Axialbewegung des Vorsprungs relativ zur Nut und damit eine Axialbewegung der Spreizhülse relativ zum Bolzen, vorzugsweise eine Axialbewegung der Spreizhülse relativ zum Bolzen in den Spreizbereich hinein, hemmt. Nach der Erfindung ist also vorgesehen, dass der Querschnitt der Nut längs des Bolzens variiert, so dass der in die Nut eingreifende Vorsprung je nach Position der Spreizhülse relativ zum Bolzen unterschiedlich stark mit der Nut reibt, was wiederum zur Folge hat, dass es je nach Position der Spreizhülse relativ zum Bolzen unterschiedlicher Kräfte bedarf, um die Spreizhülse am Bolzen zu verschieben. Erfindungsgemäss wird in besonders einfacher und kostengünstiger Weise ein zusätzlicher Parameter bereitgestellt, mit dem der Verspreizvorgang des Ankers kontrolliert werden kann. Dies wiederum erlaubt es, Konflikte aufzulösen, die unter Umständen bei herkömmlichen Spreizankern bestehen können. So kann bei herkömmlichen Ankern beispielsweise einerseits eine relativ steife Ausführung der Hülse erwünscht sein, zum Beispiel um der Möglichkeit eines vorzeitigen vollständigen Durchziehens des Bolzens durch die Hülse bei gesetztem Anker entgegenzuwirken, zugleich kann aber auch eine relativ weiche Ausführung der Hülse erwünscht sein, so dass sie sich beispielsweise besonders gut dem Untergrund anpassen kann und somit besonders gute Lastübertragungswerte bietet. Nach der Erfindung kann nun das Durchzugsverhalten zusätzlich mit der Verengung in der Nut kontrolliert werden, so dass zum Beispiel die Hülse im Hinblick auf Lastübertragungswerte weich gewählt werden kann, ohne dass hierbei auf das Durchzugsverhalten wesentlich Rücksicht genommen werden muss. Somit kann erfindungsgemäss ein besonders zuverlässiger Anker erhalten werden.

Die Verengung ist zweckmässigerweise zumindest in Umfangsrichtung des Bolzens und/oder der Spreizhülse gegeben, das heisst vorzugsweise ist an der Verengung die Nut in Umfangsrichtung betrachtet enger als die Breite des Vorsprungs. Vorzugsweise ist die Nut ausserhalb der Verengung so querschnittsgrösser als der Vorsprung, dass sich der Vorsprung dort im Wesentlichen reibungsfrei in der Nut bewegen kann. Insbesondere kann die Nut ausserhalb der Verengung in Umfangsrichtung des Bolzens und/oder der Spreizhülse betrachtet breiter sein als der Vorsprung. Dies kann auch herstellungstechnische Vorteile haben. Insbesondere kann in diesem Fall die Hülse besonders spannungsfrei und somit besonders einfach auf den Bolzen aufgerollt werden.

Der Bolzen kann einen Halsbereich zur Aufnahme der Spreizhülse vor dem Aufspreizen aufweisen, in welchem der Bolzen bevorzugt zumindest bereichsweise einen in Längsrichtung zumindest annähernd konstanten Querschnitt aufweist. Im Spreizbereich weitet sich der Bolzen zu seiner Spitze hin, das heisst mit zunehmendem Abstand vom Halsbereich, auf. Die Nut und/oder der Vorsprung verlaufen vorzugsweise parallel zur Längsachse des Bolzens und/oder des Spreizankers. Soweit hier von der Radialrichtung und der Längsrichtung die Rede ist, soll sich dies insbesondere auf die Längsachse des Bolzens und/oder Ankers beziehen, die insbesondere die Symmetrie- und/oder Mittelachse des Bolzens beziehungsweise des Ankers sein kann.

Die Spreizhülse und/oder der Bolzen bestehen bevorzugt aus einem Metallmaterial. Vorzugsweise weist der Bolzen an seinem dem Spreizbereich entgegengesetzten Endbereich ein Aussengewinde für eine Mutter auf. Insbesondere kann am Bolzen ein Anschlag, beispielsweise eine Ringschulter, ausgebildet sein, der eine Verschiebung der Hülse vom Spreizbereich hinweg begrenzt. Die Spreizhülse, die auch mehrteilig ausgeführt sein kann, kann aber auch bis zum Aussengewinde des Bolzens reichen. Der Spreizbereich ist erfindungsgemäss zum Aufspreizen der Spreizhülse, das heisst zum radialen Aufweiten der Spreizhülse, vorgesehen.

Der in die Nut eingreifende Vorsprung kann auch eine Verdrehsicherung bilden, die eine Verdrehung der Spreizhülse relativ zum Bolzen um die Längsachse des Bolzens herum hemmt. Grundsätzlich könnte der Vorsprung Unterbrechungen aufweisen. Bevorzugt ist der Vorsprung aber durchgehend.

Besonders bevorzugt ist es, dass die am Bolzen angeordnete Nut beziehungsweise der am Bolzen angeordnete Vorsprung zumindest teilweise ausserhalb des Spreizbereichs verläuft. Diese Ausführungsform kann unter anderem berücksichtigen, dass die Zugkräfte des gesetzten Spreizankers vorrangig im Spreizbereich in den Bolzen eingeleitet werden. Dadurch, dass die Nut beziehungsweise der Vorsprung zumindest teilweise, vorzugsweise zur Gänze, ausserhalb des Spreizbereichs verläuft, wird eine Beeinträchtigung der Krafteinleitung vermieden. Vorzugsweise verläuft die Nut beziehungsweise der Vorsprung am Bolzen zumindest bereichsweise im Halsbereich, das heisst insbesondere im Bereich zwischen dem Spreizbereich und dem Anschlag für die Spreizhülse.

Weiterhin ist es bevorzugt, dass der Vorsprung am Bolzen und die Nut an der Spreizhülse angeordnet ist. Dies kann herstellungstechnisch besonders vorteilhaft sein. Beispielsweise kann die Nut eingewalzt werden. Der Vorsprung kann durch einen Walz- oder Stauchprozess geformt werden.

Alternativ kann vorgesehen sein, dass der Vorsprung an der Spreizhülse und die Nut am Bolzen angeordnet ist. In diesem Zusammenhang kann es besonders vorteilhaft sein, dass durch den Vorsprung die Wandstärke der Spreizhülse lokal erhöht ist. Hierdurch kann am Vorsprung eine besonders grosse Verspreizung erzielt werden, ohne dass der Halsbereich des Bolzens, in dem der Vorsprung vor dem Verspreizen angeordnet ist, wesentlich geschwächt wird. Unter einer lokalen Wandstärkeerhöhung kann insbesondere verstanden werden, dass die Wandstärke am Vorsprung grösser ist als in seiner Umgebung.

Es kann auch vorgesehen sein, dass der Spreizanker eine Vielzahl von in Längsrichtung des Spreizankers verlaufenden Nuten und eine Vielzahl von jeweils korrespondierenden Vorsprüngen aufweist, wobei zumindest ein Teil der Nuten jeweils eine Verengung aufweist, die eine Axialbewegung des korrespondierenden Vorsprungs und damit eine Axialbewegung der Spreizhülse relativ zum Bolzen, insbesondere eine Axialbewegung der Spreizhülse relativ zum Bolzen in den Spreizbereich hinein, hemmt. Es können auch alle Nuten eine solche Verengung aufweisen. Beispielsweise können sämtliche Nuten an einem der Elemente und sämtliche Vorsprünge am anderen Element vorgesehen sein. Es kann aber auch eine gemischte Anordnung vorgesehen sein, bei dem eines der Elemente einen Teil der Nuten und einen Teil der Vorsprünge aufweist.

Je nach gewünschtem Kraftverlauf kann es vorteilhaft sein, dass die Verengung an einem Ende der Nut oder in einem mittleren Bereich der Nut vorgesehen ist.

Vorzugsweise ist der Vorsprung ein Steg, der sich in Längsrichtung des Spreizankers erstreckt, und der insbesondere parallel zur Längsrichtung des Spreizankers verläuft. Hierdurch kann das Verschiebeverhalten der Spreizhülse noch genauer kontrolliert werden.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figur 1:: eine teilweise längsgeschnittene Ansicht eines in einem Betonsubstrat gesetzten erfindungsgemässen Spreizankers;
- Figur 2:: eine abgewickelte Ansicht der Aussenseite des Bolzens des Ankers aus Figur 1 im Halsbereich;
- Figur 3:: eine abgewickelte Ansicht der Innenseite der Spreizhülse des Ankers aus Figur 1; und
- Figur 4:: eine abgewickelte Ansicht der Innenseite einer anderen Ausführungsform einer Spreizhülse für den Anker aus Figur 1.

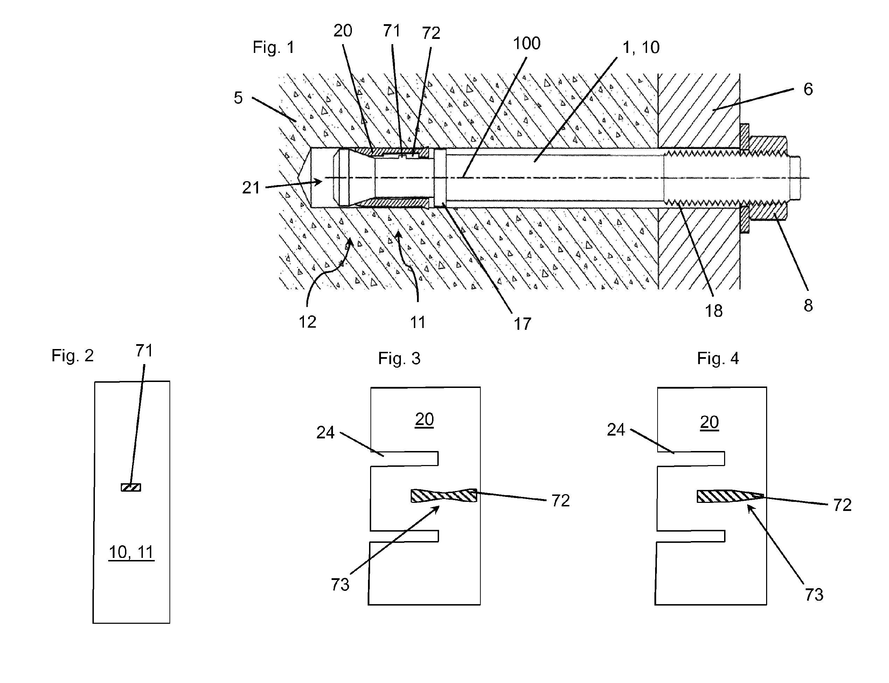

Die Figuren 1 bis 3 zeigen ein Ausführungsbeispiel eines Spreizankers 1 gemäss der Erfindung. Wie insbesondere Figur 1 zeigt, weist der Spreizanker 1 einen Bolzen 10 und eine Spreizhülse 20 auf, die den Bolzen 10 umgibt. Der Bolzen 10 weist einen Halsbereich 11 mit konstantem Querschnitt und im Anschluss an den Halsbereich 11 im vorderen Endbereich des Bolzens 10 einen Spreizbereich 12 für die Spreizhülse 20 auf, in welchem sich der Bolzen 10 ausgehend vom Halsbereich 11 zu seinem vorderen Ende hin aufweitet. Auf der dem Spreizbereich 12 abgewandten Seite des Halsbereichs 11 weist der Bolzen 10 einen beispielsweise als Ringschulter ausgebildeten Anschlag 17 für die Spreizhülse 20 auf. An seinem dem Spreizbereich 12 entgegengesetzten hinteren Endbereich ist der Bolzen 10 mit einem Aussengewinde 18 für eine Mutter 8 versehen.

Wie insbesondere in Figur 3 erkennbar ist, weist die Spreizhülse 20 Spreizschlitze 24 auf, die von der vorderen Stirnseite 21 der Spreizhülse 20 ausgehen. Diese Spreizschlitze 24 erleichtern das radiale Aufweiten der Spreizhülse 20 durch den Spreizbereich 12 des Bolzens 10. Die Spreizhülse 20 kann durch Aufrollen einer Blechplatine gefertigt werden.

Beim Setzen des Spreizankers 1 wird der Bolzen 10 mit dem Spreizbereich 12 voran in Richtung der Längsachse 100 des Bolzens 10 in ein Bohrloch im Substrat 5 aus Figur 1 geschoben. Aufgrund des Anschlags 17 wird dabei auch die Spreizhülse 20 in das Bohrloch eingebracht. Sodann wird der Bolzen 10, beispielsweise durch Anziehen der Mutter 8, wieder ein Stück weit aus dem Bohrloch herausgezogen. Aufgrund ihrer Reibung mit der Bohrlochwand bleibt die Spreizhülse 20 dabei zurück und es kommt zu einer Verschiebung des Bolzens 10 relativ zur Spreizhülse 20, bei der der Spreizbereich 12 des Bolzens 10 immer tiefer so in die Spreizhülse 20 eindringt, dass die Spreizhülse 20 vom Spreizbereich 12 des Bolzens 10 radial aufgeweitet und mit der Wand des Bohrlochs verpresst wird. Durch diesen Mechanismus wird der Spreizanker 1 im Substrat 5 fixiert. Der gesetzte Zustand des Spreizankers 1, in dem er im Substrat 5 fixiert ist, ist in Figur 1 gezeigt. Mittels der Mutter 8 kann ein Anbauteil 6 am Substrat 5 festgelegt werden.

Wie die Figuren 1 und 2 zeigen, weist der Bolzen 10 in seinem Halsbereich 11 einen Vorsprung 71 auf, der radial am Bolzen 10 nach aussen vorsteht. Wie die Figuren 1 und 3 zeigen, weist die Spreizhülse 20 eine zu diesem Vorsprung 71 korrespondierende Nut 72 auf, welche sich in Richtung der Längsachse 100 des Bolzens 10, vorzugsweise parallel zur Längsachse 100, erstreckt, und in welcher der Vorsprung 71 aufgenommen ist. Die Nut 72 der Figur 3 weist zwei Bereiche auf, in denen die Nut 72 querschnittsgrösser als der Vorsprung 71 ist, und in denen sich der Vorsprung 71 im Wesentlichen reibungsfrei bewegen kann. Zwischen diesen beiden Bereichen weist die Nut 72 eine Verengung 73 auf. Diese Verengung 73 kann der Vorsprung 71 nur mit erhöhtem Krafteinsatz passieren. Die Verengung 73 hemmt somit eine Passage des Vorsprungs 71, das heisst sie hemmt die Axialbewegung der Spreizhülse 20 relativ zum Bolzen 10 an einer vorbestimmten Axialposition. Insbesondere kann die Verengung 73 somit einem unerwünschten Durchziehen des Bolzens 10 durch die Spreizhülse 20 entgegenwirken.

Wie Figur 2 zeigt, kann der Vorsprung 71 als länglicher Steg mit Erstreckung in Richtung der Längsachse 100 des Bolzens 10, vorzugsweise parallel zur Längsachse 100, ausgebildet sein.

Ein anderes Ausführungsbeispiel einer Spreizhülse ist in Figur 4 gezeigt. Gemäss der Ausführungsform der Figur 4 befindet sich die Verengung 73 am Ende der Nut 72, während sie gemäss Figur 3 in einem mittleren Bereich der Nut 72 vorgesehen war. Insbesondere ist die Verengung 73 der Figur 4 an demjenigen Ende der Nut 72 angeordnet, welches dem Spreizbereich 12 des Bolzens 10 abgewandt und dem Gewinde 18 zugewandt ist.

## Patentansprüche

1. Spreizanker (1)
mit einem Bolzen (10) als erstes Element und mit einer Spreizhülse (20), welche den Bolzen (10) zumindest teilweise umgibt, als zweites Element, wobei der Bolzen (10) einen Spreizbereich (12) zum Aufspreizen der Spreizhülse (20) aufweist,
wobei eines der beiden Elemente eine in Längsrichtung des Spreizankers (1) verlaufende Nut (72) und das andere Element einen Vorsprung (71) aufweist, der zumindest bereichsweise in die Nut (72) eingreift,
**dadurch gekennzeichnet,**
**dass** die Nut (72) eine Verengung (73) aufweist, die eine Axialbewegung der Spreizhülse (20) relativ zum Bolzen (10) hemmt.

2. Spreizanker (1) nach Anspruch 1,
**dadurch gekennzeichnet,**
**dass** die Nut (72) ausserhalb der Verengung (73) in Umfangsrichtung des Bolzens (10) und/oder der Spreizhülse (20) betrachtet breiter ist als der Vorsprung (71).

3. Spreizanker (1) nach Anspruch 1 oder 2,
**dadurch gekennzeichnet,**
**dass** die am Bolzen (10) angeordnete Nut (72) beziehungsweise der am Bolzen (10) angeordnete Vorsprung (71) zumindest teilweise ausserhalb des Spreizbereichs (12) verläuft.

4. Spreizanker (1) nach einem der Ansprüche 1 bis 3,
**dadurch gekennzeichnet,**
**dass** der Vorsprung (71) am Bolzen (10) und die Nut (72) an der Spreizhülse (20) angeordnet ist.

5. Spreizanker (1) nach einem der Ansprüche 1 bis 3,
**dadurch gekennzeichnet,**
**dass** der Vorsprung (71) an der Spreizhülse (20) und die Nut (72) am Bolzen (10) angeordnet ist,
wobei durch den Vorsprung (71) die Wandstärke der Spreizhülse (20) lokal erhöht ist.

6. Spreizanker (1) nach einem der vorstehenden Ansprüche,
**dadurch gekennzeichnet,**
**dass** der Spreizanker (1) eine Vielzahl von in Längsrichtung des Spreizankers (1) verlaufenden Nuten (72) und eine Vielzahl von jeweils korrespondierenden Vorsprüngen (71) aufweist, wobei zumindest ein Teil der Nuten (72) jeweils eine Verengung (73) aufweist, die eine Axialbewegung der Spreizhülse (20) relativ zum Bolzen (10) hemmt.

7. Spreizanker (1) nach einem der vorstehenden Ansprüche,
**dadurch gekennzeichnet,**
**dass** die Verengung (73) an einem Ende der Nut (72) vorgesehen ist, oder
**dass** die Verengung (73) in einem mittleren Bereich der Nut (72) vorgesehen ist.

8. Spreizanker (1) nach einem der vorstehenden Ansprüche,
**dadurch gekennzeichnet,**
**dass** Vorsprung (71) ein Steg ist, der sich in Längsrichtung des Spreizankers (1) erstreckt.
